# EUROPÄISCHE PATENTANMELDUNG

(11) **EP 3 910 720 A1**
(43) Veröffentlichungstag der Anmeldung: **17.11.2021**
(21) Anmeldenummer: 21173015.5
(22) Anmeldetag: 10.05.2021
(51) Int. Cl.: H01M 10/46, H01M 10/613, H01M 10/6563, H01M 50/247, B60L 1/00

(54) **ENERGIEVERSORGUNGSVORRICHTUNG MIT KÜHLVORRICHTUNG SOWIE BAUMASCHINE MIT EINER SOLCHEN ENERGIEVERSORGUNGSVORRICHTUNG**

(30) Priorität: 12.05.2020 DE 102020112785
(71) Anmelder: Wacker Neuson Produktion GmbH & Co. KG, 85084 Reichertshofen (DE)
(72) Erfinder: STEFFEN, Michael, 80796 München (DE)
(74) Vertreter: Müller Hoffmann & Partner

(57) **Zusammenfassung**

Es wird eine Baumaschine angegeben, mit einem Elektroanrieb (1), einem elektrischen Energiespeicher (6) zum Versorgen des Elektroantriebs (1) mit elektrischem Strom, einer von dem Elektroantrieb (1) antreibbaren Arbeitsvorrichtung (4) zum Bewirken einer Arbeitsbewegung, und mit einer Kühlvorrichtung für den Energiespeicher (6), wobei die Kühlvorrichtung ein Solarpanel (9) zum Erzeugen eines elektrischen Stroms bei Lichteinfall, eine durch den Strom von dem Solarpanel (9) betreibbare Lüftungsvorrichtung (10) zum Erzeugen einer Luftströmung (13) und eine Luftführungseinrichtung zum Führen der Luftströmung (13) entlang dem elektrischen Energiespeicher (6) aufweist.

## Beschreibung

Die Erfindung betrifft eine Energieversorgungsvorrichtung und eine Baumaschine, insbesondere eine elektrisch angetriebene Baumaschine mit einer derartigen Energieversorgungsvorrichtung. Die Energieversorgungsvorrichtung kann insbesondere einen als Energiespeicher dienenden Akku aufweisen.

Zahlreiche Baumaschinen werden unter freiem Himmel eingesetzt und dadurch starken thermischen Belastungen durch Sonneneinstrahlung ausgesetzt. Weitere thermische Belastungen können durch die Wärme entstehen, die im Betrieb der Baumaschine durch den Antrieb oder weitere Komponenten (zum Beispiel Hydraulikkomponenten) erzeugt werden. Der Antriebsmotor, sei es, dass er als Verbrennungsmotor oder als Elektromotor ausgeführt ist, kann im Betrieb erhebliche Wärme erzeugen, die zur Belastung der anderen Komponenten der Baumaschine führt.

Bei immer mehr Baumaschinen wird der verbrennungsmotorische Antrieb durch einen Elektromotor ersetzt, zu dessen Energieversorgung ein Energiespeicher in der Baumaschine vorgesehen wird. Mit Hilfe des Energiespeichers (Akku) ist es möglich, die Baumaschine unabhängig von einem öffentlichen Stromnetz und damit unabhängig von Stromkabeln o.ä. zu betreiben.

Auch bei Baumaschinen mit Verbrennungsmotorantrieb ist ein Energiespeicher mit meist kleinerer Kapazität vorgesehen, der zum Beispiel als Starterbatterie oder zum Betreiben von Bedienelementen und Steuerungen dient.

Die beschriebenen thermischen Belastungen können die Lebensdauer der Energiespeicher neben weiteren Einflussfaktoren (z.B. Alterung) stark negativ beeinflussen. So können thermische Belastungen der Energiespeicher durch Sonneneinstrahlung und durch Flutwärme von Antriebseinheit und Arbeitsvorrichtung (z.B. Hydraulik) dazu führen, dass sich die Lebensdauer der Energiespeicher erheblich verkürzt, sobald die Temperatur in den Energiespeichern ansteigt. Die Alterung erfolgt in grober Annäherung exponentiell zur Temperatur. Aus der Literatur lassen sich Alterungsfaktoren von 50% je 10 K Temperaturerhöhung entnehmen (Arrheniusgleichung). Demnach würde ein auf 25°C Raumtemperatur spezifizierter Akku bei 55°C um den Faktor 8 altern, was zu einer theoretisch möglichen Gesamtlebensdauer von nur noch 12,5% des Wertes führen würde, den der Akku bei einer dauerhaften Temperatur von 25°C erreichen könnte.

Der Erfindung liegt die Aufgabe zugrunde, eine Vorrichtung anzugeben, mit deren Hilfe die thermische Alterung eines Energiespeichers verringert werden kann. Dabei soll insbesondere aber nicht die lokal vorhandene, in dem Energiespeicher gespeicherte Energie verbraucht werden.

Die Aufgabe wird erfindungsgemäß durch eine Energieversorgungsvorrichtung mit einer Kühlvorrichtung gemäß Anspruch 1 gelöst. Die Energieversorgungsvorrichtung kann vorteilhaft in einer Baumaschine eingesetzt werden. Vorteilhafte Ausgestaltungen sind in den abhängigen Ansprüchen angegeben.

Es wird eine Energieversorgungsvorrichtung angegeben, mit einem elektrischen Energiespeicher und mit einer Kühlvorrichtung für den Energiespeicher, wobei die Kühlvorrichtung aufweist: ein Solarpanel zum Erzeugen eines elektrischen Stroms bei Lichteinfall und eine durch den Strom von dem Solarpanel betreibbare Lüftungsvorrichtung zum Erzeugen einer Luftströmung entlang dem elektrischen Energiespeicher.

Bei dem elektrischen Energiespeicher kann es sich insbesondere um einen an sich üblichen Akku handeln, in dessen Innerem entsprechend geeignete, wiederaufladbare Batteriezellen miteinander gekoppelt sind.

Die erfindungsgemäße Kühlvorrichtung ermöglicht es, dass der Energiespeicher allein durch Lichteinfall, insbesondere Sonnenlichteinfall gekühlt werden kann, ohne dass dabei Energie aus dem elektrischen Energiespeicher selbst genutzt werden muss. Vielmehr wandelt das Solarpanel das einfallende (Sonnen-)Licht in elektrischen Strom, der zum Betrieb der Lüftungsvorrichtung und damit zum Erzeugen der Luftströmung genutzt wird. Die Luftströmung wird entlang dem Energiespeicher geführt und trägt so zu dessen Kühlung bei. Dadurch wird die Temperaturtoleranz des Energiespeichers deutlich verbessert.

Das Solarpanel weist geeignete Solarzellen bzw. photovoltaische Zellen auf, um Licht in elektrischen Strom wandeln zu können.

Ein besonders vorteilhafter Effekt ist es, dass mit stärkerem Sonneneinfall und damit stärkerer Erwärmung der - mit dem Energiespeicher ausgestatteten - Baumaschine und des Energiespeichers auch mehr Strom durch das Solarpanel erzeugt wird, wodurch die Lüftungsvorrichtung mit höherer Leistung betrieben werden kann, so dass auch eine stärkere Luftströmung zur Kühlung des Energiespeichers erzeugt und die Kühlwirkung verstärkt wird.

Die Lüftungsvorrichtung kann somit automatisch immer dann betrieben werden, wenn genügend Sonnenlicht auf das Solarpanel fällt und dadurch ein ausreichend großer Strom erzeugt wird. Wenn hingegen keine Sonne auf das Solarpanel fällt, kann die Lüftungsvorrichtung nicht betrieben werden, wobei in diesem Fall auch keine Erwärmung durch einfallendes Sonnenlicht erfolgt.

Die Lüftungsvorrichtung kann einen Lüftermotor und einen von dem Lüftermotor antreibbaren Lüfter aufweisen. Der Lüfter kann dabei zum Beispiel als Propeller ausgebildet sein. Dabei kann die Anordnung des Lüfters in geeigneter Weise gewählt werden. Zum Beispiel kann die Luftführungseinrichtung stromauf (saugseitig) oder stromab (druckseitig) von dem Lüfter angeordnet sein. Dementsprechend kann die zur Kühlung genutzte Luft durch den Energiespeicher und den Lüfter angesaugt und danach ausgeblasen. Alternativ kann die Luft auch von dem Lüfter durch den stromab angeordneten Energiespeicher gedrückt werden.

Es kann ein Gehäuse vorgesehen sein, wobei der Energiespeicher in dem Gehäuse angeordnet sein kann, das Solarpanel auf einer Außenseite des Gehäuses vorgesehen sein kann und wobei die Lüftungsvorrichtung innerhalb des Gehäuses angeordnet sein kann. Dadurch kann die gesamte Energieversorgungsvorrichtung als eine kompakte Einheit (Akkupack) bereitgestellt werden, die nicht nur den Energiespeicher, sondern auch die Kühlvorrichtung mit Solarpanel und Lüftungsvorrichtung umfasst.

Der von dem Solarpanel erzeugte Strom kann zum Versorgen der Lüftungsvorrichtung und/oder zum Aufladen des Energiespeichers und/oder zum direkten Temperieren des Energiespeichers nutzbar sein. Wie oben bereits erläutert, nutzt die Kühlvorrichtung alleine den Strom, der von dem Solarpanel erzeugt wird, nicht aber der Strom aus dem Energiespeicher, der für den Betrieb der Baumaschine erforderlich ist. Dieser vom Solarpanel erzeugte Strom kann - wie bereits beschrieben - zum Versorgen der Lüftungseinrichtung und damit zum Kühlen des Energiespeichers genutzt werden. Ebenso ist es möglich, den Strom auch dem Energiespeicher zuzuführen, um ihn aufzuladen. Dies kann vor allem dann vorteilhaft sein, wenn die Baumaschine nicht in Betrieb ist oder nicht besonders hohen Temperaturen ausgesetzt ist, weil dann keine Kühlung des Energiespeichers erforderlich ist.

Weiterhin kann der vom Solarpanel erzeugte Strom auch zum direkten Temperieren des Energiespeichers genutzt werden. Darunter ist nicht die oben beschriebene indirekte Kühlung des Energiespeichers mit Hilfe der Lüftungsvorrichtung gemeint, sondern vielmehr ein Erwärmen des Energiespeichers, die vor allem bei niedrigen Temperaturen hilfreich sein kann. Denn auch bei sehr niedrigen Temperaturen kann ein derartiger Energiespeicher geschädigt oder hinsichtlich seiner möglichen Lebensdauer eingeschränkt werden. Der von dem Solarpanel bereitgestellte Strom kann dann durch den Energiespeicher fließen, um auf diese Weise eine gewisse Wärme zu erzeugen und den Energiespeicher zu temperieren. Je nach Ausgestaltung kann ergänzend oder alternativ auch ein Heizelement vorgesehen werden, dass durch den Solar-Strom oder einen Teil des Solar-Stroms durchflossen werden kann, um Wärme für den Energiespeicher zu erzeugen. Dadurch kann der Energiespeicher auch bei niedrigen Außentemperaturen ohne Schädigung geladen und entladen werden.

Es kann eine Steuerung vorgesehen sein, zum wahlweisen Einstellen von wenigstens einem der folgenden, oben bereits erläuterten Betriebszustände: Versorgen der Lüftungsvorrichtung mit Strom von dem Solarpanel, Aufladen des Energiespeichers mit Strom von dem Solarpanel, und/oder Temperieren des Energiespeichers mit Strom von dem Solarpanel. Die Steuerung kann aufgrund von weiteren Parametern, zum Beispiel der Außentemperatur, der Temperatur am oder im Energiespeicher, der von der Baumaschine und den weiteren Komponenten erzeugten Temperaturen, der Sonneneinstrahlung, der Stärke des von dem Solarpanel erzeugten Stroms etc. Maßnahmen ergreifen und einen oder mehrere der genannten Betriebszustände aktivieren.

Bei einer Variante kann die Steuerung ausgebildet sein, zum Erfassen einer Temperatur des Energiespeichers und/oder zum Erfassen einer Umgebungstemperatur des Energiespeichers, und zum Aktivieren der Lüftungsvorrichtung, wenn die erfasste Temperatur höher als ein vorgegebener oberer Temperaturgrenzwert ist, und zum Deaktivieren der Lüftungsvorrichtung, wenn die erfasste Temperatur niedriger als ein vorgegebener unterer Temperaturgrenzwert ist.

Zum Erfassen der Temperatur können geeignete Temperatursensoren vorgesehen sein. Die beiden Temperaturgrenzwerte ermöglichen die Verwirklichung einer Hysterese, um das Aktivieren und Deaktivieren der Lüftungsvorrichtung zeitlich trennen zu können. Ebenso ist es aber auch möglich, dass die beiden Temperaturgrenzwerte identisch sind, als nur ein einziger Grenzwert relevant ist.

Es wird eine Baumaschine angegeben, mit einem Elektroantrieb, einer Energieversorgungsvorrichtung der oben beschriebenen Art zum Versorgen des Elektroantriebs mit elektrischem Strom, und mit einer von dem Elektroantrieb antreibbaren Arbeitsvorrichtung zum Bewirken einer Arbeitsbewegung.

Gegebenenfalls kann auch noch eine Luftführungseinrichtung vorgesehen sein, zum Führen der Luftströmung entlang dem elektrischen Energiespeicher.

Die Arbeitsvorrichtung kann vielfältige Funktionen erfüllen und dabei insbesondere zum Erzeugen einer gewünschten Arbeitsbewegung dienen. Die Erzeugung dieser Arbeitsbewegung wird in der Regel dem Zweck entsprechen, den die Baumaschine erfüllen soll. Zum Beispiel kann die Arbeitsvorrichtung einen Schwingungserreger aufweisen, wenn die Baumaschine eine Rüttelplatte zur Bodenverdichtung ist. Bei einem Stampfer zur Bodenverdichtung kann die Arbeitsvorrichtung eine entsprechende Stampfvorrichtung sein, die die Drehbewegung des Elektroantriebs (Elektromotors) in eine entsprechende Stampfbewegung wandelt. Eine andere Arbeitsvorrichtung kann z.B. ein Schlagwerk aufweisen.

Bei anderen Baumaschinen, wie z.B. Ladern oder Baggern, kann es sich bei der Arbeitsvorrichtung auch um einen Hydraulikantrieb handeln, der zum Vortrieb der Baumaschine oder zum Antreiben und Bewegen von Komponenten der Baumaschine (z.B. einer Laderschaufel oder einem Baggerarm) dient.

Die Luftführungseinrichtung kann z.B. durch entsprechende Luftkanäle, Leitwände, Öffnungen etc. gebildet werden, um die vom Lüfter erzeugte Luftströmung in geeigneter Weise derart zu führen, dass sie möglichst effektiv den Energiespeicher kühlt. Dazu kann die Luftführungseinrichtung die Luftströmung entlang dem Energiespeicher führen, was auch bedeutet, dass die Luftströmung durch den Energiespeicher bzw. entsprechende Luftkanäle durch den Energiespeicher führbar ist.

Die Energieversorgungsvorrichtung kann bei einer Variante integraler Bestandteil der Baumaschine sein. In diesem Fall ist wenigstens ein Teil der Komponenten der Energieversorgungsvorrichtung fest in der Baumaschine verbaut. Dabei kann der Energiespeicher selbst jedoch auch lösbar an der Baumaschine gehalten sein und z.B. bei Entleerung gegen einen frischen, aufgeladenen Energiespeicher ausgetauscht werden.

Bei einer anderen Variante kann die Energieversorgungsvorrichtung eine kompakte Einheit bilden, die vollständig von der Baumaschine gelöst werden kann, um sie gegen eine frische, aufgeladene Energieversorgungsvorrichtung auszutauschen. Dabei kann die Energieversorgungsvorrichtung z.B. in einem eigenen Gehäuse vorgesehen sein, dass alle notwendigen Komponenten der Energieversorgungsvorrichtung, insbesondere den Energiespeicher, das Solarpanel und die Lüftungsvorrichtung umschließt und/oder trägt.

Die Energieversorgungsvorrichtung kann in diesem Fall vollständig autark, ggfs. auch räumlich entfernt von der Baumaschine, durch die Kühlvorrichtung gekühlt werden. Der dafür erforderliche elektrische Strom wird durch das Solarpanel bei Sonneneinfall generiert und der Lüftungsvorrichtung zur Verfügung gestellt.

Das Solarpanel kann auf einer Komponente der Baumaschine angeordnet sein, wobei die Komponente ausgewählt sein kann aus der Gruppe Gehäuse des Elektroantriebs, Gehäuse der Arbeitsvorrichtung, Gehäuse des Energiespeichers, Führungseinrichtung der Baumaschine, Abdeckung. Dabei kann das Solarpanel insbesondere auf einer Außenseite der betreffenden Komponente angeordnet sein, damit das von außen einfallende Licht gut die photovoltaischen Elemente in dem Solarpanel erreichen kann.

Als Führungseinrichtung eignet sich zum Beispiel ein Handgriff oder ein Führungsbügel, mit dessen Hilfe ein Bediener die Baumaschine führen und halten kann. Eine derartige Führungseinrichtung weist meist einen Rohrrahmen auf, der gut geeignet ist, um ein entsprechendes Solarpanel zu tragen.

Auch haben sich bei zahlreichen Baumaschinen flächige Abdeckungen als geeignet erwiesen, um mechanische Beschädigungen oder auch Wassereintrag (zum Beispiel durch Regenfall) zu verhindern. Derartige Abdeckungen können dabei ebenfalls ein Solarpanel tragen oder als Solarpanel ausgebildet sein. Eine solche Abdeckung kann auch den Energiespeicher überdecken und schützen, ohne selbst Teil des Energiespeichergehäuses zu sein.

Das Solarpanel kann in einer Außenwand der Komponente integriert sein. In diesem Fall stellt das Solarpanel keine eigene Komponente dar, die auf einer anderen Komponente der Baumaschine befestigt ist. Vielmehr ist das Solarpanel dann integraler Bestandteil der entsprechenden Komponente. Dafür eignen sich insbesondere Abdeckungen oder Gehäuse, die an der Baumaschine ohnehin vorhanden sind.

Der Energiespeicher kann ein Gehäuse aufweisen, wobei wenigstens ein Teil der Kühlvorrichtung innerhalb des Gehäuses des Energiespeichers angeordnet sein kann. Für die Kühlung des Energiespeichers ist es zweckmäßig, wenn die zur Kühlung genutzte Luftströmung möglichst dicht an den Batteriezellen im Inneren des Energiespeichers entlanggeführt wird. Zu diesem Zweck ist es nützlich, wenn die Luftströmung wenigstens teilweise innerhalb des Gehäuses des Energiespeichers verlaufen kann.

Dazu kann wenigstens ein Teil der Lüftungsvorrichtung innerhalb des Gehäuses des Energiespeichers angeordnet sein. Ergänzend oder alternativ kann auch wenigstens ein Teil der Luftführungseinrichtung innerhalb des Gehäuses des Energiespeichers angeordnet sein.

Bei diesen Varianten kann zum Beispiel der Lüfter oder auch zusätzlich der Lüftermotor im Inneren des Gehäuses des Energiespeichers angeordnet sein.

Dabei kann es zweckmäßig sein, dass auch ein Teil der Luftführungseinrichtung innerhalb des Gehäuses angeordnet ist, um die Luft in oder durch das Gehäuse zu führen und eine bestmögliche Kühlung zu bewirken.

Der Energiespeicher kann ohne Werkzeug auswechselbar an der Baumaschine angeordnet sein. In diesem Fall kann der Energiespeicher als Wechselakku ausgebildet sein. Ein leerer Akku kann dabei einfach gegen einen vollen Akku ausgetauscht werden. Ebenso kann der Akku auch außerhalb der Baumaschine geladen werden.

Der Energiespeicher kann mit seinem Gehäuse z.B. einfach in eine an der Baumaschine vorgesehene Akkuaufnahme eingeschoben und eingerastet bzw. verriegelt und damit an der Baumaschine befestigt werden. Die dafür vorgesehenen Befestigungselemente können z.B. von Hand ohne weitere Werkzeuge einfach bedient werden, um den Energiespeicher freizugeben. Ebenso ist es möglich, die Befestigung des Energiespeichers derart auszugestalten, dass zum Lösen und Entfernen des Energiespeichers ein spezieller Schlüssel erforderlich ist, um ein unbefugtes Entfernen des Energiespeichers zu verhindern.

Dabei sind verschiedene Varianten hinsichtlich der Gestaltung der Kühlvorrichtung möglich. So kann die Luftführungseinrichtung in dem Gehäuse des Wechselakkus (Wechsel-Energiespeicher) ausgebildet sein, so dass der Energiespeicher wirkungsvoll durch Kühlluft gekühlt werden kann, die durch die Luftführungseinrichtung geführt wird.

Zusätzlich ist es auch möglich, auch den Lüfter oder sowohl den Lüfter als auch den Lüftermotor in dem Gehäuse des Wechsel-Energiespeichers anzuordnen, um einen besonders kompakten Aufbau von Lüftungsvorrichtung und Luftführungseinrichtung, also der Kühlvorrichtung insgesamt, zu erreichen. Beim Auswechseln des Energiespeichers werden die Komponenten der Kühlvorrichtung ebenfalls mit ausgewechselt.

Die Baumaschine kann ausgewählt sein aus der Gruppen Bodenverdichtungsvorrichtung, Stampfer, Vibrationsplatte, Walzvorrichtung zur Bodenverdichtung, Trennschneidvorrichtung, motorbetriebener Hammer, motorbetriebene Sägeeinrichtung, handgeführte Baumaschine mit rückengetragenem Akkupack, Innenrüttler zur Betonverdichtung mit rückengetragenem Akkupack, Wasserpumpe, Lader, Bagger.

Die Lüftungsvorrichtung kann unabhängig von einem Betriebszustand der Baumaschine arbeiten. Insbesondere muss die Baumaschine nicht in Betrieb sein, sondern kann sich auch in einem Aus-Zustand oder in einem Lagerzustand befinden. Trotzdem kann die Lüftungsvorrichtung durch den von dem Solarpanel erzeugten Strom betrieben werden.

Dabei ist es auch nicht erforderlich, dass die Lüftungsvorrichtung durch einen Bediener aktiviert wird. Sie kann beispielsweise immer aktiv sein, sobald das Solarpanel eine ausreichende Stromzufuhr gewährleistet.

Die Steuerung kann mit einem Temperatursensor vorgesehen sein, der eine Temperatur der Batteriezellen, des Gehäuseinneren oder der Umgebung misst und bei Erreichen einer vorgegebenen Schalttemperatur die Lüftungsvorrichtung aktiviert. Entsprechend kann die Lüftungsvorrichtung auch deaktiviert werden, wenn eine gemessene Temperatur eine vorgegebene Schalttemperatur unterschreitet.

Diese und weitere Vorteile und Merkmale der Erfindung werden nachfolgend anhand eines Beispiels unter Zuhilfenahme der begleitenden Figuren näher erläutert. Es zeigen:
- **Fig. 1**: eine schematische Darstellung eines Stampfers zur Bodenverdichtung mit einer erfindungsgemäßen Kühlvorrichtung; und
- **Fig. 2**: eine schematische Darstellung eines Teils der Kühlvorrichtung.

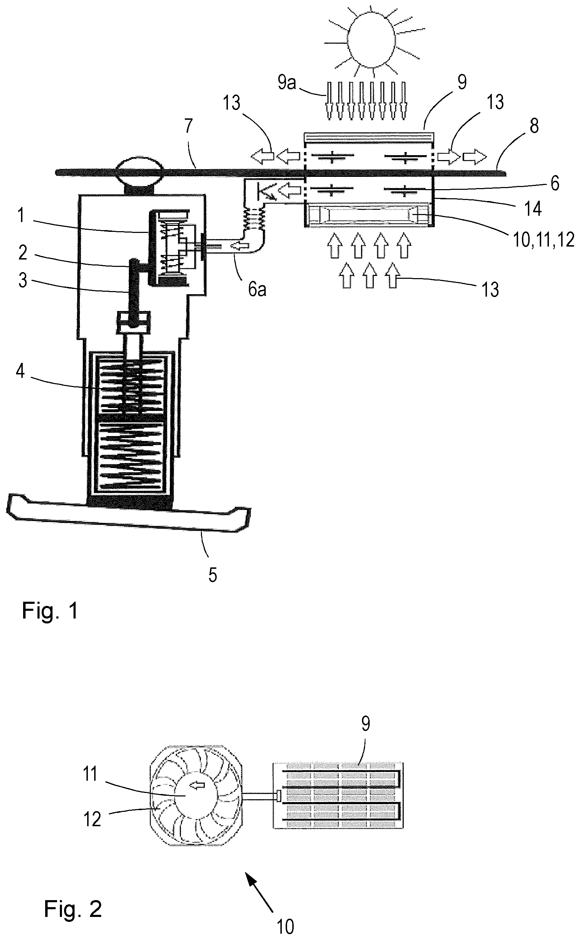

Fig. 1 zeigt in schematischer Darstellung einen als Baumaschine dienenden Stampfer zur Bodenverdichtung. Der Stampfer weist einen als Elektroantrieb dienenden Elektromotor 1 auf, der über eine Kurbelwelle 2 und ein Pleuel 3 einen an sich bekannten, als Arbeitsvorrichtung dienenden Stampfantrieb 4 antreibt.

Mit Hilfe der Kurbelwelle 2, des Pleuels 3 und des Stampfantriebs 4 wird die Drehbewegung des Elektromotors 1 in eine stampfende, oszillierende Hin- und Herbewegung gewandelt, die auf eine Bodenkontaktplatte 5 übertragen wird.

Das Arbeitsprinzip eines derartigen Stampfers ist bekannt, so dass sich an dieser Stelle eine weitergehende Beschreibung erübrigt.

Der Stampfantrieb 4 dient dabei als Arbeitsvorrichtung zum Bewirken einer entsprechenden Arbeitsbewegung (hier: Stampfbewegung). Die Erfindung ist jedoch nicht auf eine derartige Stampfvorrichtung eingeschränkt. Vielmehr kann ein entsprechender Elektromotor 1 zum Antreiben von vielfältig gestalteten Arbeitsvorrichtungen ausgebildet sein.

Die elektrische Energie für den Elektromotor 1 wird durch einen elektrischen Energiespeicher 6 bereitgestellt. Der Energiespeicher 6 (auch als Akku bezeichnet) ist an einem Führungsbügel 7 des Stampfers befestigt. Hier hat sich eine Anordnung in der Nähe von Handgriffen 8 bewährt, an denen ein Bediener den Stampfer beim bestimmungsgemäßen Gebrauch greift und führt.

Der Energiespeicher 6 kann wechselbar an dem Führungsbügel 7 befestigt sein. Zu diesem Zweck kann an dem Führungsbügel 7 eine entsprechende Aufnahme bzw. Halterung vorgesehen sein, in die der Energiespeicher 6 eingeschoben werden kann.

Oberhalb von dem Energiespeicher 6 ist ein Solarpanel 9 angeordnet, das Solarzellen bzw. photovoltaische Elemente enthält und bei Lichteinfall 9a (Pfeile) einen elektrischen Strom erzeugt.

Mit Hilfe dieses elektrischen Stroms ist eine Lüftungsvorrichtung 10 betreibbar, die einen Lüftermotor 11 und einen Lüfter 12 aufweist. Das Solarpanel 9 speist somit den Lüftermotor 11 in der Lüftungsvorrichtung 10. Dadurch erzeugt der Lüfter 12 eine Luftströmung 13, die entlang oder durch den Energiespeicher 6 geführt werden kann.

Der Energiespeicher 6 ist in dem in Fig. 1 gezeigten Beispiel stromab von der Lüftungsvorrichtung 10 angeordnet, so dass die Lüftungsvorrichtung 10 die Luft in Form der Luftströmung 13 nachfolgend durch den Energiespeicher 6 drückt und auf diese Weise eine wirksame Kühlung des Energiespeichers 6 bewirkt.

Zwischen dem Energiespeicher 6 und dem Elektromotor 1 kann, wie in Fig. 1 gezeigt, eine Schlauchverbindung 6a vorgesehen sein, über die im Betrieb des Elektromotors 1 ein Luftstrom geführt wird, der auch den Energiespeicher 6 kühlt. Dieser Luftstrom kann dabei im Wesentlichen auch zur Kühlung des Elektromotors 1 dienen und z.B. durch ein am Elektromotor 1 vorgesehenes Lüfterrad erzeugt werden.

Im Stillstand, bei abgeschaltetem Elektromotor 1, kann auch der von der Lüftungsvorrichtung 10 erzeugte und am Energiespeicher 6 zu dessen Kühlung vorbeigeführte Luftstrom weiter über die Schlauchverbindung 6a zum Elektromotor 1 geführt werden, um diesen zu kühlen.

Das Solarpanel 9 und die Lüftungsvorrichtung 10 können integraler Bestandteil des Energiespeichers 6 sein, also insbesondere in oder an einem Gehäuse 14 des Energiespeichers 6 vorgesehen sein. Der Energiespeicher 6, das Solarpanel 9 und die Lüftungsvorrichtung 10 bilden dann mit dem Gehäuse 14 eine Energieversorgungsvorrichtung.

Diese Energieversorgungsvorrichtung kann integraler Bestandteil des Stampfers sein. Bei einer Variante kann die Energieversorgungsvorrichtung auch vollständig von dem Stampfer getrennt werden, um z.B. ihren Energiespeicher 6 außerhalb des Stampfers aufzuladen.

Es ist auch möglich, dass wenigstens eine der beiden Komponenten oder beide Komponenten Solarpanel 9 und Lüftungsvorrichtung 10 an dem Führungsbügel 7 befestigt sind und lediglich der Energiespeicher 6 (gegebenenfalls zusammen mit dem Solarpanel 9 oder der Lüftungsvorrichtung 10) in eine entsprechende Aufnahme und Halterung eingesetzt werden kann. In diesem Fall sind also nicht sämtliche Komponenten Solarpanel 9 und Lüftungsvorrichtung 10 integrale Bestandteile des Energiespeichers 6.

## Patentansprüche

1. Energieversorgungsvorrichtung, mit
- einem elektrischen Energiespeicher (6); und mit
- einer Kühlvorrichtung für den Energiespeicher (6);
wobei die Kühlvorrichtung aufweist:
- ein Solarpanel (9) zum Erzeugen eines elektrischen Stroms bei Lichteinfall; und
- eine durch den Strom von dem Solarpanel (9) betreibbare Lüftungsvorrichtung (10) zum Erzeugen einer Luftströmung (13) entlang dem elektrischen Energiespeicher (6).

2. Energieversorgungsvorrichtung nach Anspruch 1, wobei die Lüftungsvorrichtung (10) einen Lüftermotor (11) und einen von dem Lüftermotor (11) antreibbaren Lüfter (12) aufweist.

3. Energieversorgungsvorrichtung nach einem der vorstehenden Ansprüche, wobei
- ein Gehäuse (14) vorgesehen ist;
- der Energiespeicher (6) in dem Gehäuse (14) angeordnet ist;
- das Solarpanel (9) auf einer Außenseite des Gehäuses (14) vorgesehen ist; und wobei
- die Lüftungsvorrichtung (10) innerhalb des Gehäuses (14) angeordnet ist.

4. Energieversorgungsvorrichtung nach einem der vorstehenden Ansprüche, wobei der von dem Solarpanel (9) erzeugte Strom zum Versorgen der Lüftungsvorrichtung (10) und/oder zum Aufladen des Energiespeichers (6) und/oder zum direkten Temperieren des Energiespeichers (6) nutzbar ist.

5. Energieversorgungsvorrichtung nach einem der vorstehenden Ansprüche, wobei eine Steuerung vorgesehen ist, zum wahlweisen Einstellen von wenigstens einem der folgenden Betriebszustände:
- Versorgen der Lüftungsvorrichtung (10) mit Strom von dem Solarpanel (9), und/oder
- Aufladen des Energiespeichers (6) mit Strom von dem Solarpanel (9), und/oder
- Temperieren des Energiespeichers (6) mit Strom von dem Solarpanel (9).

6. Energieversorgungsvorrichtung nach einem der vorstehenden Ansprüche, wobei die Steuerung ausgebildet ist,
- zum Erfassen einer Temperatur des Energiespeichers und/oder zum Erfassen einer Umgebungstemperatur des Energiespeichers; und
- zum Aktivieren der Lüftungsvorrichtung (10), wenn die erfasste Temperatur höher als ein vorgegebener oberer Temperaturgrenzwert ist; und
- zum Deaktivieren der Lüftungsvorrichtung (10), wenn die erfasste Temperatur niedriger als ein vorgegebener unterer Temperaturgrenzwert ist.

7. Baumaschine, mit
- einem Elektroanrieb (1);
- einer Energieversorgungsvorrichtung nach einem der vorstehenden Ansprüche zum Versorgen des Elektroantriebs (1) mit elektrischem Strom; und mit
- einer von dem Elektroantrieb (1) antreibbaren Arbeitsvorrichtung (4) zum Bewirken einer Arbeitsbewegung.

8. Baumaschine nach Anspruch 7, wobei eine Luftführungseinrichtung vorgesehen ist, zum Führen der Luftströmung (13) entlang dem elektrischen Energiespeicher (6).

9. Baumaschine nach einem der Ansprüche 7 oder 8, wobei
- das Solarpanel (9) auf einer Komponente der Baumaschine angeordnet ist; und wobei
- die Komponente ausgewählt ist aus der Gruppe Gehäuse des Elektroantriebs, Gehäuse der Arbeitsvorrichtung, Gehäuse des Energiespeichers (14), Führungseinrichtung (7), Abdeckung.

10. Baumaschine nach einem der Ansprüche 7 bis 9, wobei das Solarpanel (9) in eine Außenwand der Komponente integriert ist.

11. Baumaschine nach einem der Ansprüche 7 bis 10, wobei
- der Energiespeicher (6) ein Gehäuse (14) aufweist; und wobei
- wenigstens ein Teil der Kühlvorrichtung innerhalb des Gehäuses (14) des Energiespeichers (6) angeordnet ist.

12. Baumaschine nach einem der Ansprüche 7 bis 11, wobei
- wenigstens ein Teil der Lüftungsvorrichtung (10) innerhalb des Gehäuses (14) des Energiespeichers (6) angeordnet ist; und/oder
- wenigstens ein Teil der Luftführungseinrichtung innerhalb des Gehäuses (14) des Energiespeichers (6) angeordnet ist.

13. Baumaschine nach einem der Ansprüche 7 bis 12, wobei der Energiespeicher (6) ohne Werkzeug auswechselbar an der Baumaschine angeordnet ist.

14. Baumaschine nach einem der Ansprüche 7 bis 13, wobei die Baumaschine ausgewählt ist aus der Gruppe Bodenverdichtungsvorrichtung, Stampfer, Vibrationsplatte, Walzvorrichtung, Trennschneidvorrichtung, motorbetriebener Hammer, motorbetriebene Sägeeinrichtung, handgeführte Baumaschine mit rückengetragenem Akkupack, Innenrüttler mit rückengetragenem Akkupack, Wasserpumpe, Lader, Bagger.
